# EUROPEAN PATENT SPECIFICATION

(11) **EP 3 225 765 B1**
(45) Date of publication and mention of the grant of the patent: **09.09.2020**
(21) Application number: 16195515.8
(22) Date of filing: 25.10.2016
(51) Int. Cl.: E04H 4/14, A61H 33/00, E04H 4/00, E04H 4/12, A61H 33/02, H04W 4/80

(54) **INTELLIGENT POOL APPARATUS**
INTELLIGENTE SCHWIMMBADVORRICHTUNG
APPAREIL DE PISCINE INTELLIGENT

(30) Priority: 28.03.2016 CN 201610182542; 28.03.2016 CN 201620244244 U
(43) Date of publication of application: 04.10.2017
(73) Proprietor: Bestway Inflatables & Material Corp., Shanghai 201812 (CN)
(72) Inventor: LIU, Feng, Shanghai, Shanghai 201812 (CN)
(74) Representative: AWA Sweden AB

(56) References cited:
- WO-A1-2014/172559
- US-A1- 2004 261 167
- US-A1- 2008 311 898

## Description

### TECHNICAL FIELD

The present invention relates to a pool apparatus and more particularly related to an intelligent pool apparatus.

### BACKGROUND

People like water related activities based on instinct. In addition to lakes, rivers, ocean and traditional pools, various pool products are designed and produced. For example, a pool with bubbles or massage water flows or larger size of pools for playing or swimming provide different functions and meet different needs.

Most pool designs focus on convenience and reliability of assembly. Nevertheless, if more needs are discovered and satisfied, more pools may be used for enhancing human life. US 2004/0261167 A1 discloses a pool apparatus according to the preamble of claim 1.

### SUMMARY OF INVENTION

According to the invention, a pool apparatus is provided according to claim 1. The size of such pool apparatus may be different for different needs. For example, pools for performing water flow or bubble massage, the width of such pools may only needs 100 cm. On the other hand, pools may have width more than 3 meters for provide several people to play and swim in the pools.

Such pool apparatus includes a pool main body, which can be of various shapes, like a circular shape, an ellipse shape, a rectangular shape, a square shape, a polygonal shape or any other irregular shape. The pool main body may be created with a tarpaulin as a water-proof clothing to form an inflatable space or be created with a tarpaulin accompanied with support pillars. Other design and materials may also be used under different needs and considering factors.

The pool main body is used for carrying water or other liquids like milk, water, tea water, wet mud or other material for users to do activities therein.

One or more than one reaction devices are connected to the pool main body. The reaction device refers to various devices that may interact with outside. For example, the reaction device may be a speaker and associated circuits that generates sounds. For example, the reaction device may be a device for cooling or heating water in the pool main body. For example, the reaction device may be a device that emits mist spray of various smells or simulates a hot spring. For example, the reaction device may be a device that emits different lights. For example, the reaction device may be a device that adjusts the water level of the pool apparatus. For example, the reaction device may be a filtering device that cleans water in the pool main body. For example, the reaction device may be a device for generating bubbles or water flows for performing massage.

The pool apparatus also includes a control circuit connected to one or more of the reaction devices. The control circuit operates the reaction device according to a setting to add additional functions of the pool apparatus.

The control circuit may be connected to an external device via one or more than one wireless networks. When the external device is connected, a user may use the external device to adjust the setting. Instead of pairing the external device with the control circuit in advance, the external device interacts with the control circuit via a protocol to gain access and adjust the setting. For example, the external device may be a mobile phone or a tablet computer, which is not specifically designed for the pool apparatus. Unlike a traditional remote controller, which is specifically designed to pair with the pool apparatus, such external devices may be any electronic device belonged to users once the external devices are equipped with certain communication capability. For examples, a browser or an installed app on a mobile phone or a tablet computer as an external device may be used to communicate with the control circuit for performing adjustment of the setting.

In one embodiment, the control circuit may include a Bluetooth or a Wi-Fi network interface and may simulate itself as an external storage device. When an external device is connected to the external storage device, the external device may retrieve necessary program codes from the external storage device and install the program codes on the external device. With the installed program codes, the external device may perform further communication with the pool apparatus.

In another design, the pool apparatus may be disposed with a two-dimension bar code. A user may use a mobile phone to scan the two-dimension bar code to connect to a server over a network. The two-dimension bar code may include model types or product serial codes. The external device may be communicated with the server with a standard web browser or other tools. Furthermore, the external device may download corresponding software from the server. In another design, the external device may perform adjustment of the setting on the server with various program codes like HTML, Javascript, CSS and/or accompanied with backend database. When the server is connected to the control circuit of the pool apparatus, the server may transmit the setting to the control circuit of the pool apparatus to adjust the setting in the pool apparatus.

In other words, such approach is different from traditional remote controllers. Traditional remote controllers are usually designed specifically to an associated product with one-to-one mapping. With the design as mentioned above, such pool apparatuses may correspond to various smart phones or other electronic devices.

The control circuit may include simple control circuits like controllers embedding 8051, ARM cores, etc. Alternatively, the control circuit may be a general computer or a mini computer like a Raspberry PI, Arduino, an Intel-based computer, etc. with different speeds, processing frequencies, internal storage spaces. The functions as mentioned above and to be mentioned below may be implemented with hardware circuit logic, software or any of their combinations. In addition, these functions may be embedded in the control circuit when the pool apparatuses are built in a factory. Or, a user may install associated program codes to the control circuit to add the logic function via a wire approach, a wireless approach or a storage approach. Alternatively, the control circuit may be automatically connected to a predetermined server for downloading necessary program codes or function adjustment.

In addition, the external device needs not be pre-configured to work with the pool apparatus. Instead, the external device may be configured with program installation or function adjustment by connecting to a remote web server. Therefore, the control circuit may correspond to different external devices and store different sets of the setting.

In other words, when there are several people using a pool apparatus, or there are many customers using a pool apparatus, users may install operation functions on their mobile phones. When users carry their mobile phones and get close to the pool apparatus, the control circuit may detect the existence of the mobile phones with a wireless network like via Bluetooth or Wi-Fi.

Next, a mobile phone may communicate with the control circuit in the pool apparatus so as to determine user identity of the mobile phone and to load corresponding setting. Based on the setting, the control circuit operates one or more than one reaction devices.

A user may use multiple devices to communicate with the pool apparatus. For example, a smart watch of a user may use RF ID to inform the pool apparatus with the user identity. When the control circuit of the pool apparatus obtains such information, corresponding setting is loaded to provide a user with predetermined operations.

Theoretically, even one user may have multiple sets of the setting. For example, a user may set different sets of the setting respectively for working days, holidays, morning, evening, easy mood or under high pressure. Then, the user may select one set of the setting based on different needs when using the pool apparatus. For another example, a user may adjust the setting based on current needs and such setting may be stored via a file or any storage format. For example, an XML (eXtensible Markup Language) format file may take a XML format to record necessary information, including operation parameters of one or more than one reaction devices under different circumstances. For another example such setting may be stored as corresponding numbers in a register, a flash memory or any other storage devices.

As mentioned above, there are various types of the reaction device. One pool apparatus may be disposed with more than one reaction devices. Some examples are provided as follows. However, the invention is only limited to the appended claims.

Firstly, the reaction device may be a filter for cleaning water in the pool main body of the pool apparatus according to a setting. Specifically, the setting may include rules for periodically or non-periodically under certain conditions activating part or whole of the filter function. For example, certain sensors may be disposed in a pipe of the pool apparatus to detect water quality. When water quality is worse than a predetermined threshold, water filtering function is activated immediately, like turn on a corresponding filter pump for guiding water out of the pool apparatus and perform filtering. After filtering, clean water is directed back to the pool apparatus. However, a user may sometimes want to perform filtering when the pool apparatus is not used or at night time. For another example, a user may want to turn on a filter during use of the pool apparatus and turn off the filter when the user leaves the pool apparatus. The user may use the external device to provide and set various operation methods to the control circuit of the pool apparatus to adjust one or more sets of the setting to get different ways to use the pool apparatus.

In another example, the reaction device may include a smell generator for emitting air or liquid based on the setting. For example, some users may favor hot spring bathing. A powder or liquid material container that provides smell and feeling of a hot spring may be disposed in the pool apparatus. Such powder and liquid may be directed to be mixed with water in the pool apparatus via a switch. Theoretically, one user may have multiple sets of the setting or different users may have different sets of the setting. For example, if there are two users A and B. A may create two sets of the setting like a hot spring smell and a rose smell. B may create a set of the setting like tea smell. Under use of the pool apparatus, the pool apparatus may identify who is the user currently using the pool apparatus and then automatically directs corresponding powder and the liquid to the pool apparatus according to user identity. Or, the pool apparatus may provide multiple settings for a user to select one desired smell via a button, which may be visually created based on program codes of the external device, of the external device or of a panel of the pool apparatus.

In another example, the reaction device may be a spray device with multiple smells. Such spray device may be installed with one or more than one type of liquid or condensed air with different smells. The control circuit may operate the spray device to emit desired smell satisfying user needs based on user operation or automatically based on predetermined rules so as to increase additional functions of the pool apparatus.

In another example, the reaction device may include an audio player to play audio effect according to the setting. For example, different users may store their music list. One user may create multiple sets of music list. The external device or a remote server over a network may transmit corresponding music data to the control circuit of the pool apparatus to control the audio circuit to generate corresponding audio effect like raining, frog sounds or music.

In another example, the reaction device may be a water volume control for controlling water level of the pool main body based on the setting. For example, different users may favor different water levels of the pool apparatus. In some pool apparatuses, water pipe may be used for directing water in or out of the pool apparatus to adjust water level of the pool apparatus. For example, a corresponding valve for controlling water input and output may be used for controlling water level of the pool apparatus.

In another example, the reaction device may be a temperature tuner to control water temperature of the pool apparatus based on the setting. Different designs may be applied for controlling water temperature. For example, to heat water to increase to a desired temperature, electrical or gas based heating may be used. On the other hand, there are different designs to lower down water temperature, too. For example, the temperature tuner may include a cooler that adjusts water flow mixing ratio between a water flow that is processed by a cooler and another water flow to generate and control water temperature in the pool apparatus. The cooler may be an ice box or a fan-based cooler. The temperature of the water flow that flows through an ice box or other temperature decreasing structure is lowered down and mixed with other water flow to achieve desired temperature lowering effect.

Another reaction device may include a lighting device to emit different light effects based on the setting. Such reaction device may be created with one or more than one light emitting devices and associated circuits. Such reaction device is not necessary to be fixed directly on the pool apparatus. Such or other reaction devices that are mentioned below may be created as a water-proof module that communicates with the control circuit of the pool apparatus via wire or wireless communication. Alternatively, the reaction device may communicate directly with the external device to be controlled, upgraded or installed with software.

In another example, the reaction device may be a massage bubble generator that provides different massage bubbles to the user staying in the pool main body based on the setting. For example, the size, frequency and other parameters of the massage bubbles may be adjusted with corresponding designs to meet the setting. In addition, it is found that when bubble surface is specially processed, bubble may have different characteristics. For example, ultrasound waves may be applied to generate fragmented surface of bubbles to increase clean effect or change touching effect of the bubbles. Such functions may be added by providing a corresponding reaction devices under control by the control circuit and are not repeated again for brevity.

According to the invention, the reaction device includes a massage water flow generator to generate desired massage water flow in the pool apparatus based on the setting. For example, an adjustment interface may be designed on the external device so that a user may use a touch screen like the one on a mobile phone to control flowing manner, frequency, strength, etc. of a water flow. Furthermore, the user may use the external device to create a massage pattern over time domain like a music composition that defines how the massage water flow is varied during time. Such massage pattern may be even on sale or shared on a platform.

Further, according to the invention, the pool apparatus comprises a position detector for detecting user position in the pool main body. Such position detector may be implemented with corresponding circuits and structures via optical, touch, radar or other way to detect where a user or an object is located. For example, an optical image sensor may be applied accompanied with image analysis technique to determine user position, body shape or even pose. In another example, several sensor structures may be provided so that when a user is sitting or touching the sensor structures, corresponding signals are generated and sent to the control circuit. The control circuit generates corresponding massage water flow at associated positions according to the signals.

Furthermore, the position detectors may be used for continuously detecting user positions and the control circuit may provide corresponding massage water flows to different body portion of a user based on the detected body shape and pose. In another example, based on the analysis of the body shape and pose of a user, acupuncture points of the user, which are special positions over human surface for accepting stimulus under Chinese medicine theory, may be stimulated with massage water flows. Such features are particularly popular for Asian customers.

In another example, one or more than one sensors may be disposed in the pool apparatus for detecting status of the pool apparatus and sending the detected status to the control circuit of the pool apparatus. As such, the control circuit may control or adjust at least one reaction device based on the detected status based on the setting. For example, the sensor may be a sensor for detecting water temperature, surrounding temperature, water volume, water quality, user position, etc.

In another example, the control circuit may include a first network interface and a second network interface. The control circuit retrieves connection information used for the second network interface from one external device via the first network interface. In an example, the first network interface is Bluetooth interface and the second network interface is Wi-Fi interface. A user sends the Wi-Fi password and associated information of a Wi-Fi router to the control circuit with a mobile phone via Bluetooth. When the control circuit receives the login information like the password for the Wi-Fi router, the control circuit of the pool apparatus may retrieve necessary resources via the Internet or provide remote control of the pool apparatus via another Internet device, e.g. to heat water in advance, to add water or to filter water of the pool apparatus.

In another example, the control circuit may be a mini-computer running a web server like Apache Web Server or other software/hardware combination to provide similar functions. With such web server, the control circuit may communicate with the external device via standard HTTP protocol to adjust the setting as mentioned above. With such design, an external device or other devices may communicate with the control circuit of the pool apparatus via a standard browser. Furthermore, new control interface may be changed via changing HTML coding. The interface may even be downloaded from a remote device to the pool apparatus to change characteristic of the control interface of the pool apparatus.

In such design, web pages may be used as an operation interface for using different design techniques for providing users with related information of the pool apparatus like water quality, temperature, etc. On the other hand, such web pages may be designed for users to set parameters or adjust operation habit of the pool apparatus. These operations may be transformed to corresponding files or parameter list so that the control circuit may control one or more than one reactive devices to function based on the files or parameter list to provide users with corresponding service.

Besides, after the external device is connected to a remote server to adjust corresponding setting, the adjusted setting may be further transmitted to the control circuit to adjust the setting in the pool apparatus. Specifically, the external devices like a mobile phone may interact with the control circuit indirectly, instead of directly, via a third device. For example, a mobile phone is connected to a remote server and uses the remote server to configure the pool apparatus. When the configuration of the setting is finished, the adjusted setting is actively sent to the pool apparatus. Alternatively, the pool apparatus may connect to the remote server to retrieve the adjusted setting periodically or non-periodically for modify settings of the pool apparatus.

When the external device is a mobile phone or a tablet computer, the pool apparatus may have one or more water-proof carrier for placing these external devices. As such, when a user is using the pool apparatus, the user may still use the mobile phone to read messages, talk or list to music while enjoying the pool apparatus.

The pool apparatus may have multiple reaction devices. The setting of the pool apparatus may include multiple sub-settings. In another example, the control circuit may provide multiple sets of the setting and select one set of the setting based on a predetermined condition to control the multiple reaction devices to work together to provide users with corresponding service. In another word, settings for multiple reaction devices may be combined as a combined setting. For example, lighting and music may be combined so that lighting effect is changed corresponding to music content. For example, to create forest effect, raindrop sounds may be accompanied with green lighting effect as a combination. In another example, the massage water flow may be accompanied with music or be adjusted dynamically according to massage water flow. In another example, music, massage water flow, water temperature, and water volume may be combined as a combined setting. A user may store multiple sets of the setting and select one set of the combination to control multiple reaction devices.

The control circuit may determine user identify based on detected external device, like the identification code of the external device. Based on the determined user identity, the reaction devices are controlled accordingly. The control circuit may actively or passively read messages from one or more than one external devices and code these messages accordingly. When a different external device is found, it may be determined that a different user is using the pool apparatus. Therefore, when a user carries an external device like a wrist belt or a mobile phone that has identity information, the pool apparatus may automatically identify the user and loads corresponding predetermined setting and the user interface.

In another example, when a pool apparatus is larger and may contain more than one users to use the pool apparatus at the same time. In such case, when the control circuit detects multiple external devices corresponding to multiple users, a combination setting corresponding to the multiple users may be selected to control the reaction devices accordingly. In other words, when the control circuit finds that only a user A is using the pool apparatus, the setting corresponding to the user A. When the control circuit finds that two users A and B are using the pool apparatus at the same time, a combination setting corresponding to the users A and B is loaded and the control circuit controls the pool apparatus accordingly.

The control circuit may also refer to timing information to adjust the setting and control the reaction device according to the setting. For example, the control circuit may calculate a corresponding season based on date information to adjust the setting. For example, different settings may be set for summer and winter. The timing information may refer to time in a day, like morning, after or evening. The control circuit may adjust the setting under different conditions.

The control circuit may also actively connect to a remote server to retrieve a message from a remote server via the wireless network as mentioned above and adjust the setting according to the message. For example, the message may include weather information that is obtained from a weather web server that provides weather information. In another example, the control circuit may inquire a network server to find its IP address and calculates its location to further find corresponding world time, season, temperature, humidity, etc.

The control circuit may retrieve multimedia streaming data like film or music via a network to play in the pool apparatus. Users may transmit account information like password to the control circuit via an external device like a mobile phone.

The pool main body may be an inflatable pool or a pool made of tarpaulin and supporting pillars. Other structures of pool apparatus may also be applied with the invention mentioned here.

### BRIEF DESCRIPTION OF DRAWINGS

Fig. 1 illustrates an embodiment of a pool apparatus;
Fig. 2 illustrates a diagram of reaction devices in the pool apparatus;
Fig. 3 illustrates an interaction between a control circuit and other devices;
Fig. 4 illustrates a flowchart for an external device to obtain control procedures;
Fig. 5A illustrates a flowchart for a control circuit to provide corresponding control based on identify of external devices;
Fig. 5B illustrates a flowchart of a Bluetooth device and connection establishment;
Fig. 5C illustrates a flowchart of a Wi-Fi device and connection establishment;
Fig. 6 illustrates an embodiment of a cooler;
Fig. 7 illustrates an embodiment that provides corresponding massage water flow based on detected user position;
Fig. 8 illustrates a flowchart for a control circuit to quickly get connection parameters;
Fig. 9 illustrates an interface via a web page format; and
Fig. 10 illustrates a carrier embodiment.

### DETAILED DESCRIPTION

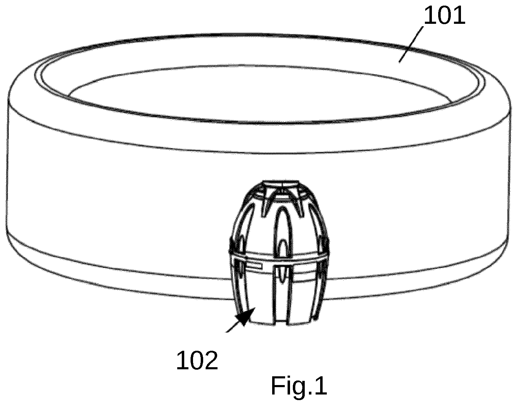

Please refer to Fig. 1, which illustrates a first embodiment. In the first embodiment, a pool apparatus 10 is provided for a user to do activities in the pool apparatus like to play, to swim or to get massage service. The size of the pool apparatus may be changed based on different needs. For example, a pool apparatus may have a width of 100 cm. In another example, a pool apparatus may have a width of 3 meters for providing multiple users to use the pool apparatus at the same time.

The pool apparatus 10 includes a pool main body 101 that may have a circular shape, an ellipse shape, a rectangular shape, a squire shape, a polygonal shape, an irregular shape or any other shape. The pool main body 101 may be created with tarpaulin forming an inflatable space or created with tarpaulin with associated support pillars. Other designs and material may be used under different design requirements.

The pool main body 101 may be used for carrying water or other liquid like milk, water, tea, web mud to form milk bath, tea bath, skin protecting bath or hot spring effect for users to do activities therein.

In Fig. 1, a charging pump 102 is used for air charging the pool main body 101 and for filtering water in the pool main body 101. Usually, the charging pump 102 may be located aside the pool main body 101, but please be noted that the charging pump 102 may be integrated with the pool main body 101 together as a module. Besides, the pool main body 101 may be inflated by air charging with an external charging device and form a pool apparatus with the charging pump 102.

Because the charging pump 102 is usually connected to an electric source and is water-proof. Some reaction devices or the control circuit may be placed together with the charging pump 102.

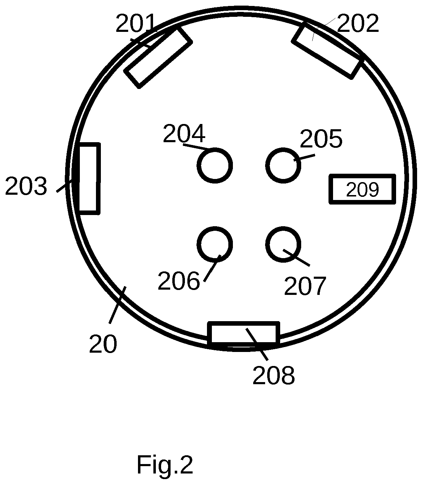

Please refer to Fig. 2, one or more than one reaction devices are connected to the pool main body 20, which means more than one reaction devices are mechanically or physically connected to and/or electrically connected at different places like to be designed as a separate device placed aside the pool main body 20. These reaction devices may be designed with water-proof and designed as modules to be connected wirelessly. For example, a wireless water-proof speaker may be detached and drop inside the pool main body or be placed at a fixed position of the pool main body. In another example, one or more than one reaction devices may be combined like to be integrated as a floating device with sound and lighting effect. Such device may be connected to the control circuit 209 of the pool apparatus wirelessly and get controlled by the control circuit 209.

The reaction devices may include various devices that may interact with outside world like a speaker 201 and associated circuits for generating sound, a device 202 for heating or cooling water in the pool main body, a device 203 that generates spray with different smells, a device 204 for simulating a hot spring, a device 205 that emits different lights, a device 206 for changing water level of the pool main body, a device 207 for filtering water in the pool main body, and a device 208 for providing massage.

The pool apparatus further has a control circuit 209 connected to one or more reaction devices to operate these reaction devices based on a setting to increase additional functions of the pool apparatus.

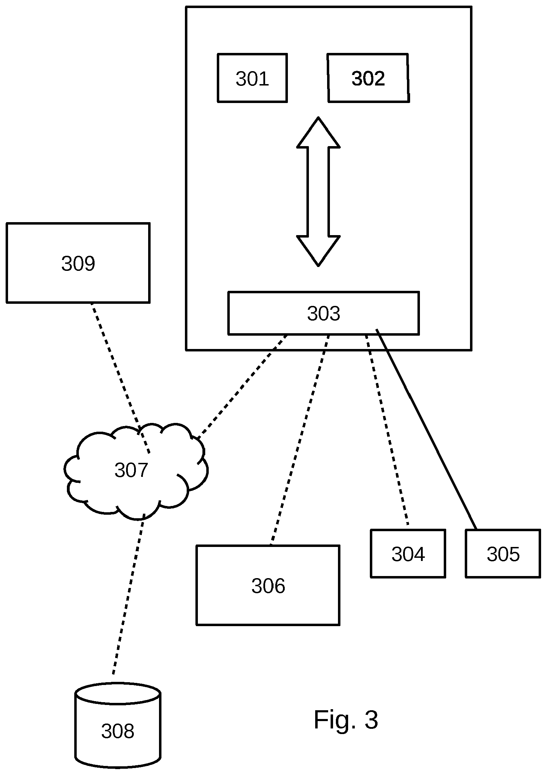

Fig. 3 illustrates a design of a control circuit. The control circuit of a pool apparatus embodiment may include a processor 301, a storage device 302 and a transmission interface 303. The processor 301 may be a simple controller reading program codes from the storage device 302 and performing corresponding operations. External messages are retrieved via wire or wireless interface 303 and control instructions are generated based on the setting stored in the storage device 302. The control instructions are transmitted to a reaction device 305 via a wire or transmitted to a reaction device 304 wirelessly. The control circuit may be integrated in a control integrated chip (IC) or may be implemented with a computer loaded with corresponding program codes. It is known that current electronic computing technology still improves quickly. Different designs may be adopted based on different design requirements.

A user may use an external device like a mobile phone or a tablet computer to interact with the control circuit to adjust the operation and parameters of the reaction devices 304, 305. In addition, the control circuit 303 may be indirectly connected to the Internet via a Wi-Fi router with another network 307. With such connection, the control circuit may download necessary program codes or data from a remote server 308. A user may use a computer or other terminal device 309 to configure the control circuit 309 via the network 307.

The control circuit may be connected with the external device via one or more than one wireless networks. When the external device is connected, a use may use the external device to adjust the setting. The external device does not need to be paired with the control circuit in advance. Instead, the external device may interact with the control circuit with a protocol to get access control and adjust the setting. For example, the external device may be a mobile phone or a tablet computer that is not designed specifically for the pool apparatus. However, with installed program codes or a browser on the external device like a mobile phone or a computer, the external device may interact with the control circuit to perform adjustment of the setting.

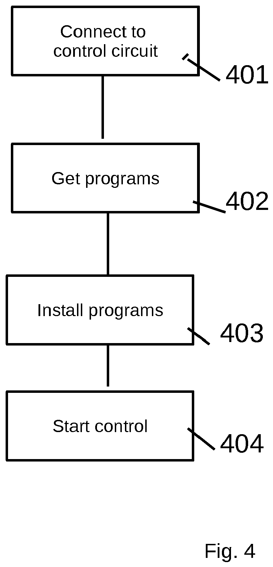

Please refer to Fig. 4, the control circuit may install a network interface of Bluetooth or Wi-Fi and simulate itself as an external storage device. When the external device is connected to the external storage device (step 401), the program codes are obtained from the storage device (step 402) and installed on the external device (step 403). With the installed program codes, the external device may interact with the control circuit of the pool apparatus (step 404).

In another example, the pool apparatus may include a two-dimension bar code. A user may use a mobile phone to scan the two-dimension bar code to connect to a server over a network. The two-dimension bar code may include model number or product serial number. The external device may use a standard browser or other tools to connect with the server to download corresponding software. In another example, the external device may perform adjustment of the setting on the server that is created with HTML, Javascript, CSS and accompanied database. When the server is connected with the control circuit of the pool apparatus, the server may transmit the setting to the control circuit of the pool apparatus to adjust the setting of the pool apparatus.

In other words, this approach is different with traditional remote controllers. Traditional remote controls usually correspond specifically to the product. With the design of the pool apparatus described herein, various smart phones and electronic devices may be directly used to control the pool apparatus.

The control circuit of the pool apparatus may be a simple control circuit like a control circuit of 8051, ARM core, or any other computer with different working speeds, processing frequencies and storage capacity. Different hardware, software and various combination thereof may be used to implement the aforementioned functions. Corresponding functions may be embedded in when the pool apparatus is built in a factory. User may install corresponding program codes to the control circuit wire or wirelessly from an external device.

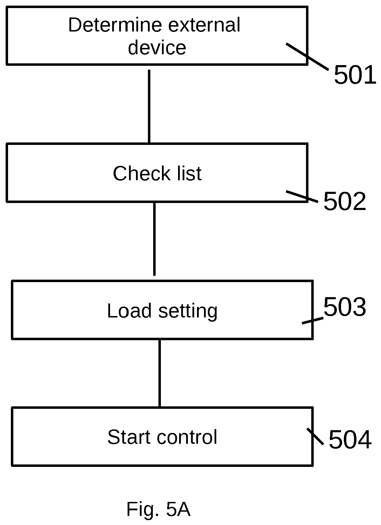

Please refer to Fig. 5A. A mobile phone may interact with the control circuit of the pool apparatus to determine which user owns the mobile phone (step 501). Corresponding setting is loaded (step 503). One or more than one reaction devices are operated accordingly (step 504).

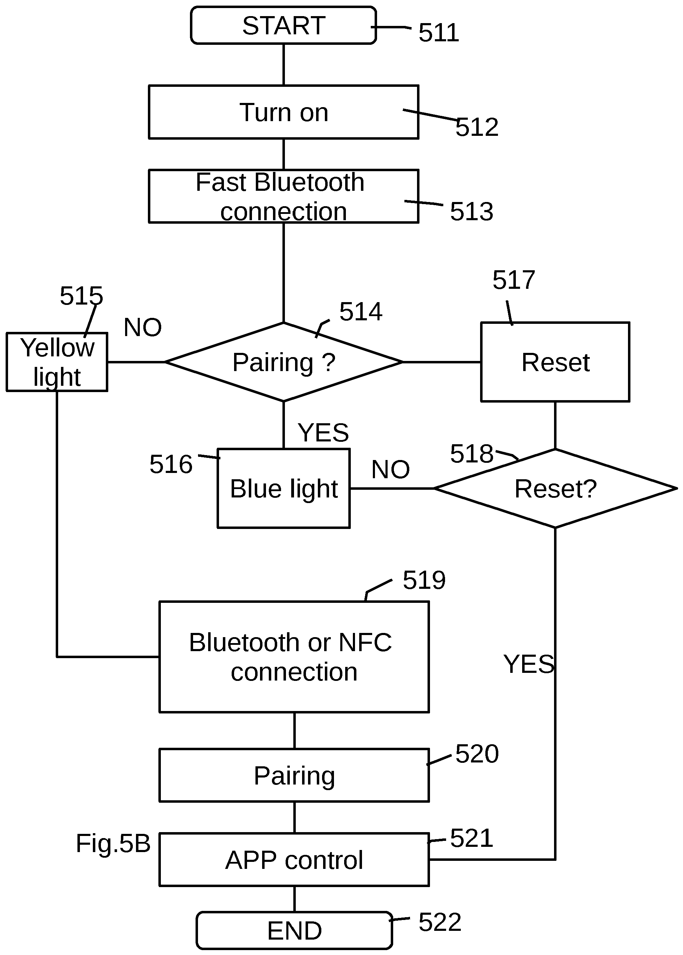

Please refer to Fig. 5B, which illustrate a connection flowchart between a mobile phone and a pool apparatus via Bluetooth. At beginning, a user brings a mobile phone to get close to the pool apparatus (step 511). The user uses the operation of the pool apparatus to turn on operation of the pool apparatus (step 512). A switch button may be disposed on the charging pump of the pool apparatus. Next, the user may press a button of the pool apparatus to activate Bluetooth function (step 513). The operation of the pool apparatus starts searching Bluetooth devices to determine whether there is a successful pairing (step 514). If the setting is stored, a blue light is blinking (step 516). Otherwise, a yellow light is blinking (step 515).

Users may press a button of the pool apparatus to reset the pool apparatus (step 517). The pool apparatus determines whether the reset is still performed when the blue light is blinking (step 518). If there is no successful pairing, the mobile phone turns on Bluetooth setting or uses NFC to perform fast setting (step 519). After the pairing (step 520), the mobile phone may use a pre-installed programs or a web interface to operate the pool apparatus. These operations may have different variations until the operation is completed.

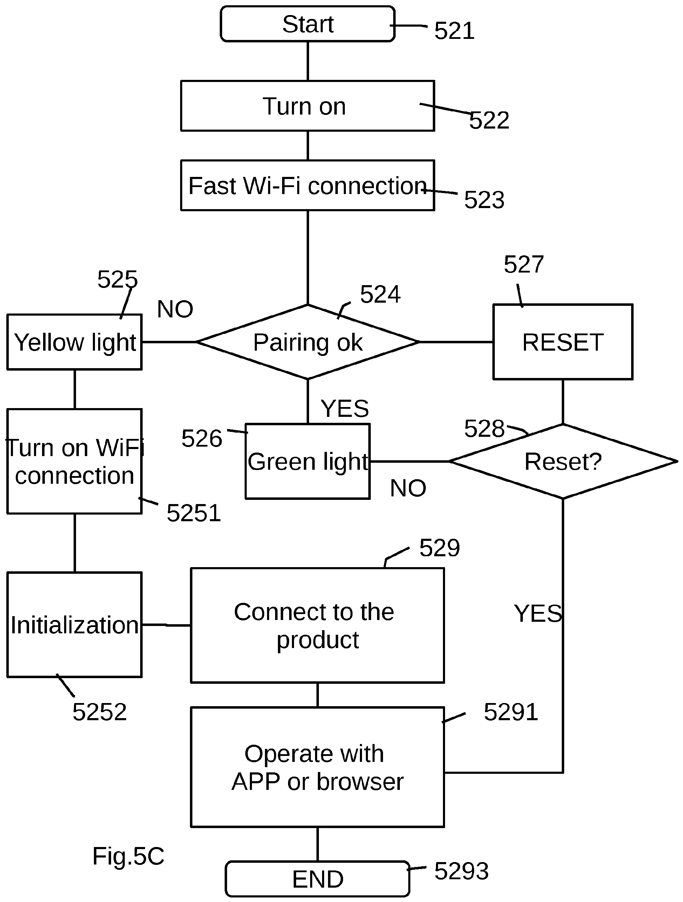

Fig. 5C illustrates an operation flowchart of the pool apparatus with a Wi-Fi device. Firstly, a user prepares a computer or a mobile phone to operate the pool apparatus (step 521). The user turns on the pool apparatus (step 522). Next, the user presses the button of the pool apparatus to start fast Wi-Fi connection function (step 523). The pool apparatus determines whether it is connected to a router (step 524). If another router is to be connected, a button may be provided for performing reset. Besides, it may be determined whether to perform reset after the green light is blinking (step 528). If the connection is successful, the red light is blinking (step 526). If the connection is failed, the yellow light is blinking. ° The mobile phone or the computer turns on Wi-Fi or uses another network to connect to the pool apparatus. An initialization may be performed after connection like setting passwords of a router (step 5252). Next, the mobile phone or the computer may use Wi-Fi or other network to connect to the pool apparatus (step 529). For example, the router and corresponding firewall may be configured to obtain network capability. When the pool apparatus may be connected to the local Wi-Fi network, the mobile phone or the computer may operate the pool apparatus (step 5291). These operation may be continuously performed until the user leaves the pool apparatus (step 5293).

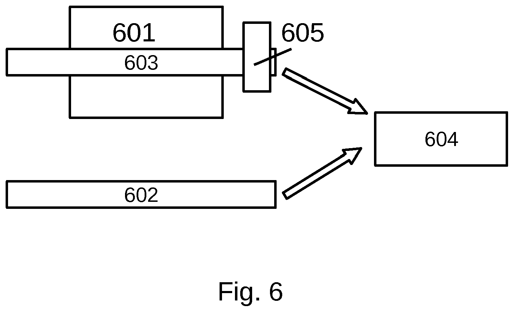

Fig. 6 illustrates another embodiment. An ice box 601 is used for a user to put ice therein. A water pipe 603 directs water into the ice box 601 to cool the water. The valve 605 receives control signal from the control circuit to determine water flow volume. Another water pipe 602 directs water flow not under cooling processing. The valve 605 adjusts water flow volume of the water pipe 603 so that the water pipe 604 directs water of desired temperature to the pool apparatus.

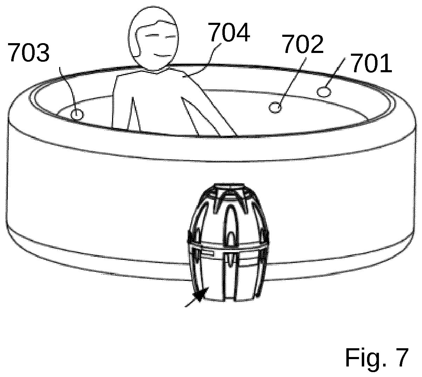

Please refer to Fig. 7. At least one position sensor 701 is disposed in the pool apparatus for detecting user position in the pool apparatus. For example, a camera may be used accompanied with image processing analysis to determine position, body shape or pose of the user 704. The control circuit uses such information to provide massage water flow with the massage water flow generators 702, 703 at corresponding positions. In this example, the user 704 is close to the water flow generator 702 and far from the water flow generator 703. The control circuit may control the two water flow generators 702, 703 to generate different water patterns corresponding to user position.

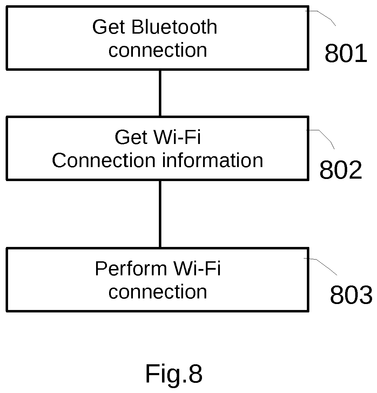

Please refer to Fig. 8. The control circuit may include a first network interface and a second network interface. The control circuit obtains connection message of the second network interface (step 802) from the first network interface by connecting to the external device (step 801). The first network interface is a Bluetooth interface and the second network interface is a Wi-Fi interface. A user may transmit login passwords of a Wi-Fi router to the control circuit of the pool apparatus via a Bluetooth interface. When the control circuit retrieves the login passwords, the control circuit is connected to the Wi-Fi router (step 803) to access necessary resources over the network.

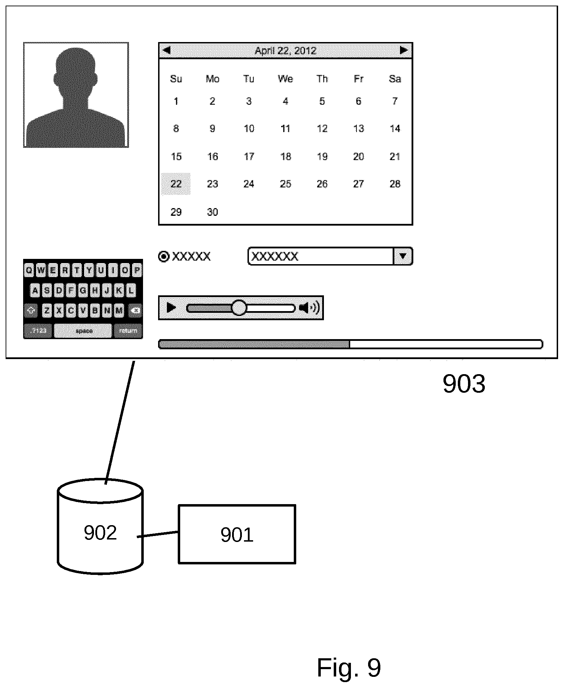

Please refer to Fig. 9. The control circuit 901 may be a mini computer running a web server 902 like Apache web server. With the web server, the external device may interact with the control circuit of the pool apparatus via HTTP protocol to adjust the setting. In other words, the external device only needs a standard browser 903 to communicate with the control circuit 901. In such design, new control interface may be changed by changing its HTML codes or download new interface remotely to the control circuit 901 to change the interface.

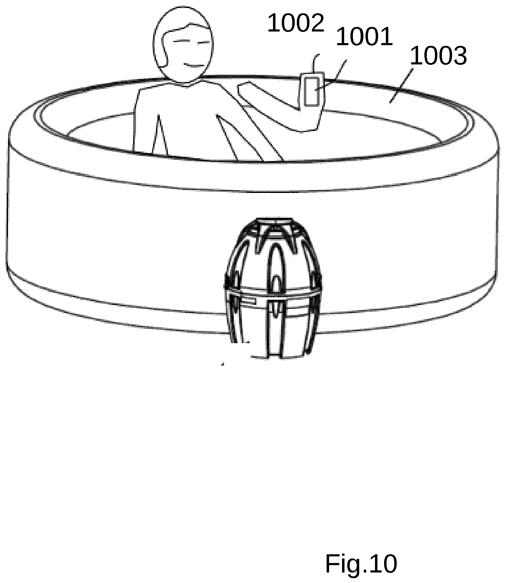

Besides, when the external device is a mobile phone or a tablet computer, the pool apparatus may arrange a carrier that is water-proof for placing the mobile phone or the tablet computer. Please refer to Fig. 10, the external device 1001 like a mobile phone may be placed on the water-proof carrier 1002. The water-proof carrier 1002 may be placed at a suitable place 1003 like a handle or a place that is visually close to the user.

The scope of the present invention is defined by the appended claims.

## Claims

1. A pool apparatus for a user to perform activities therein, comprising:
a pool main body (20) to carry liquid for a user to do activities in the pool main body;
at least one reaction device (201, 202, 203, 204, 205, 206, 207, 208) disposed within the pool main body;
a control circuit (209) connected to the at least one reaction device for performing a function of the pool apparatus according to a setting for operating the at least one reaction device;
at least one wireless network (307) operatively connecting the control circuit to an external device without pairing the external device with the control circuit in advance;
at least one sensor operatively connected to the control circuit; **characterized in that** the pool apparatus further comprises
a position sensor (701) for detecting a position of the user (704) in the pool main body (20);
wherein the control circuit interacts with the external device via a protocol to allow the external device to access and adjust the setting according to user input;
wherein the at least one reaction device comprises a massage water flow generator (702, 703) for providing massage water flows to the user in the pool main body according to the setting; and
wherein the control circuit controls the massage water flow generator to provide the massage water flow at one or more positions corresponding to the detected position of the user.

2. The pool apparatus of claim 1, wherein the control circuit corresponds to one or more different external devices and stores different sets of the setting, and when the control circuit detects the one or more different external device located within a predetermined range, the control circuit automatically loads predetermined settings corresponding to the one or more different external device and operates the at least one reaction device according to the loaded predetermined setting.

3. The pool apparatus of claim 1, wherein the at least one reaction device comprises a filter (207) for cleaning water in the pool main body according to the setting.

4. The pool apparatus of claim 1, wherein the at least one reaction device comprises a smell generator (203) for emitting air or liquid according to the setting.

5. The pool apparatus of claim 1, wherein the at least one reaction device comprises an audio player for playing audio according to the setting.

6. The pool apparatus of claim 1, wherein the at least one reaction device comprises a water volume controller to adjust a water level in the pool main body according to the setting.

7. The pool apparatus of claim 1, wherein the at least one reaction device comprises a temperature tuner for adjusting water temperature of the pool main body according to the setting.

8. The pool apparatus of claim 1, wherein the at least one reaction device comprises a lighting device (205) for providing different lighting effects according to the setting.

9. The pool apparatus of claim 1, wherein the at least one reaction device comprises a massage bubble generator for providing massage bubbles in the pool main body according to the setting.

10. The pool apparatus of claim 1, wherein the position detector continuously detects the position of the user and the controller detects user body shape and user pose to provide the user corresponding massage water for different body portions of the user according to the detected user body shape and the detected user pose.

11. The pool apparatus of claim 1, wherein the at least one sensor (701) comprises a detector for detecting status of the pool main body and the status being sent to the control circuit to control the at least one reaction device according to the setting.

12. The pool apparatus of claim 1, wherein the control circuit comprises a first network interface and a second network interface, the control circuit obtains connection information from the external device via the first network interface for use by the second network interface.

13. The pool apparatus of claim 1, wherein the external device is connected to an external server to adjust the setting and the external server is used for sending the setting to the control circuit to operate the at least one reaction device based on the received setting.

## Patentansprüche

1. Pool-Vorrichtung zum Ausführen von Aktivitäten durch einen Benutzer darin, umfassend:
einen Pool-Hauptteil (20) zum Tragen von Flüssigkeit zum Durchführen von Aktivitäten in dem Pool-Hauptteil durch einen Benutzer;
mindestens ein Reaktionsgerät (201, 202, 203, 204, 205, 206, 207, 208), das in dem Pool-Hauptteil angeordnet ist;
eine Steuerungsschaltung (209), die mit dem mindestens einen Reaktionsgerät verbunden ist, zum Ausführen einer Funktion der Pool-Vorrichtung gemäß einer Einstellung zum Betreiben des mindestens einen Reaktionsgeräts;
mindestens ein drahtloses Netzwerk (307), das die Steuerungsschaltung betriebsmäßig mit einem externen Gerät verbindet, ohne das externe Gerät im Vorhinein mit der Steuerungsschaltung zu paaren;
mindestens einen Sensor, der betriebsmäßig mit der Steuerungsschaltung verbunden ist;
**dadurch gekennzeichnet, dass** der Pool ferner Folgendes umfasst:
einen Positionssensor (701) zum Erkennen einer Position des Benutzers (704) in dem Pool-Hauptteil (20);
wobei die Steuerungsschaltung über ein Protokoll mit dem externen Gerät interagiert, um es dem externen Gerät zu ermöglichen, gemäß einer Nutzereingabe auf die Einstellung zuzugreifen und sie anzupassen;
wobei das mindestens eine Reaktionsgerät einen Massagewasserstromgenerator (702, 703) zum Bereitstellen von Massagewasserströmen für den Benutzer in dem Pool-Hauptteil gemäß der Einstellung umfasst; und
wobei die Steuerungsschaltung den Massagewasserstromgenerator steuert, um den Massagewasserstrom an einer oder mehreren Positionen entsprechend der erkannten Position des Nutzers bereitzustellen.

2. Pool-Vorrichtung nach Anspruch 1, wobei die Steuerungsschaltung einem oder mehreren verschiedenen externen Geräten entspricht und verschiedene Sätze der Einstellung speichert und wobei die Steuerungsschaltung das eine oder die mehreren verschiedenen externen Geräte erkennt, die sich innerhalb eines festgelegten Bereichs befinden, die Steuerungsschaltung automatisch festgelegte Einstellungen lädt, die dem einen oder den mehreren verschiedenen externen Geräten entsprechen, und das mindestens eine Reaktionsgerät gemäß der geladenen Einstellung betreibt.

3. Pool-Vorrichtung nach Anspruch 1, wobei das mindestens eine Reaktionsgerät einen Filter (207) zum Reinigen von Wasser in dem Pool-Hauptteil gemäß der Einstellung umfasst.

4. Pool-Vorrichtung nach Anspruch 1, wobei das mindestens eine Reaktionsgerät einen Geruchsgenerator (203) zum Emittieren von Luft oder Flüssigkeit gemäß der Einstellung umfasst.

5. Pool-Vorrichtung nach Anspruch 1, wobei das mindestens eine Reaktionsgerät ein Audioabspielgerät zum Abspielen von Audioinhalt gemäß der Einstellung umfasst.

6. Pool-Vorrichtung nach Anspruch 1, wobei das mindestens eine Reaktionsgerät eine Wasservolumensteuerung zum Anpassen eines Wasserstandes in dem Pool-Hauptteil gemäß der Einstellung umfasst.

7. Pool-Vorrichtung nach Anspruch 1, wobei das mindestens eine Reaktionsgerät eine Temperaturabstimmung zum Anpassen der Wassertemperatur des Pool-Hauptteils gemäß der Einstellung umfasst.

8. Pool-Vorrichtung nach Anspruch 1, wobei das mindestens eine Reaktionsgerät ein Beleuchtungsgerät (205) zum Bereitstellen verschiedener Beleuchtungseffekte gemäß der Einstellung umfasst.

9. Pool-Vorrichtung nach Anspruch 1, wobei das mindestens eine Reaktionsgerät einen Massageblasengenerator zum Bereitstellen von Massageblasen in dem Pool-Hauptteil gemäß der Einstellung umfasst.

10. Pool-Vorrichtung nach Anspruch 1, wobei der Positionsdetektor kontinuierlich die Position des Benutzers erkennt und die Steuerung die Körperform des Benutzers und die Benutzerhaltung erkennt, um dem Benutzer entsprechendes Massagewasser für verschiedene Körperabschnitte des Benutzer gemäß der erkannten Körperform des Benutzers und der erkannten Benutzerhaltung bereitzustellen.

11. Pool-Vorrichtung nach Anspruch 1, wobei der mindestens eine Sensor (701) einen Detektor zum Erkennen des Status des Pool-Hauptteils umfasst und der Status zur Steuerungsschaltung gesendet wird, um das mindestens eine Reaktionsgerät gemäß der Einstellung zu steuern.

12. Pool-Vorrichtung nach Anspruch 1, wobei die Steuerungsschaltung eine erste Netzwerkschnittstelle und eine zweite Netzwerkschnittstelle umfasst, wobei die Steuerungsschaltung Verbindungsinformationen von dem externen Gerät über die erste Netzwerkschnittstelle zur Verwendung durch die zweite Netzwerkschnittstelle bezieht.

13. Pool-Vorrichtung nach Anspruch 1, wobei das externe Gerät mit einem externen Server verbunden ist, um die Einstellung anzupassen, und der externe Server zum Senden der Einstellung an die Steuerungsschaltung verwendet wird, um das mindestens eine Reaktionsgerät basierend auf der empfangenen Einstellung zu betreiben.

## Revendications

1. Appareil de piscine dans lequel un utilisateur peut réaliser des activités, comprenant :
un corps principal de piscine (20) contenant un liquide permettant à un utilisateur de réaliser des activités dans le corps principal de piscine ;
au moins un dispositif de réaction (201, 202, 203, 204, 205, 206, 207, 208) disposé à l'intérieur du corps principal de piscine ;
un circuit de commande (209) connecté à l'au moins un dispositif de réaction pour réaliser une fonction de l'appareil de piscine conformément à un réglage de fonctionnement de l'au moins un dispositif de réaction ;
au moins un réseau sans fil (307) connectant fonctionnellement le circuit de commande à un dispositif externe sans pairer le dispositif externe au circuit de commande à l'avance ;
au moins un capteur connecté fonctionnellement au circuit de commande ;
**caractérisé en ce que** l'appareil de piscine comprend en outre
un capteur de position (701) pour détecter une position de l'utilisateur (104) dans le corps principal de piscine (20) ;
dans lequel le circuit de commande interagit avec le dispositif externe par l'intermédiaire d'un protocole pour permettre au dispositif externe d'accéder au réglage et de l'ajuster conformément à une entrée d'utilisateur ;
dans lequel l'au moins un dispositif de réaction comprend un générateur de courants d'eau de massage (702, 703) pour fournir des courants d'eau de massage à l'utilisateur dans le corps principal de piscine conformément au réglage ; et
dans lequel le circuit de commande commande le générateur de courants d'eau de massage pour fournir le courant d'eau de massage à une ou plusieurs positions correspondant à la position détectée de l'utilisateur.

2. Appareil de piscine selon la revendication 1, dans lequel le circuit de commande correspond à un ou plusieurs dispositifs externes différents et mémorise différents ensembles de réglages, et quand le circuit de commande détecte les un ou plusieurs dispositifs externes différents situés en-deçà d'une distance prédéterminée, le circuit de commande charge automatiquement des réglages prédéterminés correspondant aux un ou plusieurs dispositifs externes différents et exploite l'au moins un dispositif de réaction conformément au réglage prédéterminé chargé.

3. Appareil de piscine selon la revendication 1, dans lequel l'au moins un dispositif de réaction comprend un filtre (207) pour nettoyer l'eau dans le corps principal de piscine conformément au réglage.

4. Appareil de piscine selon la revendication 1, dans lequel l'au moins un dispositif de réaction comprend un générateur d'arômes (203) pour diffuser de l'air ou un liquide conformément au réglage.

5. Appareil de piscine selon la revendication 1, dans lequel l'au moins un dispositif de réaction comprend un lecteur audio pour reproduire de l'audio conformément au réglage.

6. Appareil de piscine selon la revendication 1, dans lequel l'au moins un dispositif de réaction comprend un contrôleur de volume d'eau pour ajuster un niveau d'eau dans le corps principal de piscine conformément au réglage.

7. Appareil de piscine selon la revendication 1, dans lequel l'au moins un dispositif de réaction comprend un thermostat pour ajuster la température de l'eau du corps principal de piscine conformément au réglage.

8. Appareil de piscine selon la revendication 1, dans lequel l'au moins un dispositif de réaction comprend un dispositif d'éclairage (205) pour produire différents effets d'éclairage conformément au réglage.

9. Appareil de piscine selon la revendication 1, dans lequel l'au moins un dispositif de réaction comprend un générateur de bulles de massage pour produire des bulles de massage dans le corps principal de piscine conformément au réglage.

10. Appareil de piscine selon la revendication 1, dans lequel le détecteur de position détecte continûment la position de l'utilisateur et le contrôleur détecte la forme du corps de l'utilisateur et la pose de l'utilisateur pour fournir à l'utilisateur une eau de massage correspondante pour différentes parties du corps de l'utilisateur conformément à la forme du corps d'utilisateur détectée et la pose d'utilisateur détectée.

11. Appareil de piscine selon la revendication 1, dans lequel l'au moins un capteur (701) comprend un détecteur pour détecter un état du corps principal de piscine, l'état étant envoyé au circuit de commande pour commander l'au moins un dispositif de réaction conformément au réglage.

12. Appareil de piscine selon la revendication 11, dans lequel le circuit de commande comprend une première interface réseau et une seconde interface réseau, le circuit de commande obtient des informations de connexion à partir du dispositif externe par l'intermédiaire de la première interface réseau en vue de leur utilisation par la seconde interface réseau.

13. Appareil de piscine selon la revendication 1, dans lequel le dispositif externe est connecté à un serveur externe pour ajuster le réglage et le serveur externe est utilisé pour envoyer le réglage au circuit de commande afin de faire fonctionner l'au moins un dispositif de réaction sur la base du réglage reçu.
